# FASCICULE DE BREVET EUROPEEN

(11) **EP 1 610 005 B1**
(45) Date de publication et mention de la délivrance du brevet: **26.03.2008**
(21) Numéro de dépôt: 05300488.3
(22) Date de dépôt: 17.06.2005
(51) Int. Cl.: F16B 37/04, F16B 5/06

(54) **Agrafe pour la fixation d'une vis à des pièces de véhicule automobile**
Klammer für die Befestigung einer Schraube an Teile eines Automobils
Clip for the attachment of a screw to parts of an automobile

(30) Priorité: 22.06.2004 FR 0406766
(43) Date de publication de la demande: 28.12.2005
(73) Titulaire: Renault, 92100 Boulogne Billancourt (FR)
(72) Inventeur: Desprez, Sébastien, F-78340 Les Clayes sous Bois (FR)

(56) Documents cités:
- DE-A- 3 212 160
- US-A- 4 704 059
- US-A- 4 978 265

## Description

L'invention concerne les agrafes de fixation de vis dans les véhicules automobiles, en particulier pour la fixation de ferrures de ceinture de sécurité.

Le document DE-32 12 160 divulgue une agrafe permettant de relier deux pièces l'une à l'autre en coinçant les pièces entre une tête de l'agrafe et des bras mobiles élastiquement par rapport à un corps de l'agrafe, les extrémités libres des bras venant en appui contre les pièces. Les pièces se trouvent donc retenues entre la tête et ces extrémités libres. Un tel agencement peut être utilisé pour fixer provisoirement une vis reliant une ferrure de ceinture de sécurité à une ou plusieurs pièces du châssis d'un véhicule.

Par ailleurs, il est fréquent que certains modèles de véhicule soient déclinés pour former une gamme étendue de différentes versions (version sport, version break, etc.). Dans ce cas, les dimensions des pièces et les contraintes de conception peuvent varier grandement d'un véhicule à l'autre. Notamment, la ferrure de ceinture ne sera pas toujours au même endroit. Dès lors, il peut être nécessaire de disposer de différents types d'agrafes en fonction des dimensions des pièces et/ou pour tenir compte de la présence ou de l'absence de la ferrure de ceinture. Il s'ensuit une augmentation du nombre de références d'agrafes.

Un but de l'invention est de simplifier la conception de différents véhicules.

A cet effet, on prévoit selon l'invention une agrafe pour la fixation d'une vis, comprenant une tête et au moins deux bras présentant une extrémité libre, les extrémités libres s'étendant à des distances de la tête différentes l'une de l'autre.

Ainsi, suivant la configuration des pièces à relier à la vis au moyen de l'agrafe, c'est l'un ou l'autre des bras qui assure la fixation. On peut donc utiliser la même agrafe dans des circonstances différentes.

L'agrafe selon l'invention pourra présenter en outre au moins l'une quelconque des caractéristiques suivantes :
- les bras présentent chacun une deuxième extrémité, les deuxièmes extrémités s'étendant à des distances de la tête différentes l'une de l'autre ;
- les bras sont mobiles élastiquement par rapport à la tête ; et
- l'agrafe comprend un corps reliant les bras à la tête.

On prévoit également selon l'invention un châssis de véhicule comprenant au moins une pièce, une vis et une agrafe de fixation de la vis à la pièce, l'agrafe étant conforme à l'invention.

Le châssis selon l'invention pourra présenter en outre au moins l'une quelconque des caractéristiques suivantes :
- le nombre de pièces auxquelles la vis est reliée par l'agrafe est supérieur ou égal à deux ;
- le nombre de pièces est supérieur ou égal à trois ; et
- la ou au moins l'une des pièces comprend une ferrure de ceinture de sécurité.

On prévoit par ailleurs selon l'invention un ensemble de deux châssis selon l'invention, la ou les pièces étant différentes et/ou ayant des dimensions différentes entre les deux châssis, les agrafes étant identiques.

Enfin, on prévoit selon l'invention un procédé de fabrication de deux châssis de véhicule dans lequel on fixe une vis à au moins une pièce au moyen d'une agrafe, la ou les pièces étant différentes et/ou ayant des dimensions différentes entre les deux châssis et les agrafes étant identiques entre les deux châssis.

D'autres caractéristiques et avantages de l'invention apparaîtront encore dans la description suivante d'un mode préféré de réalisation donné à titre d'exemple non limitatif en référence aux dessins annexés sur lesquels :
- la figure 1 est une vue en perspective d'un châssis de véhicule selon l'invention ;
- la figure 2 est une vue à plus grande échelle d'une partie du châssis de la figure 1 ;
- la figure 3 est une vue de principe d'une agrafe selon l'invention faisant partie du châssis de la figure 1 ;
- la figure 4 est une vue en perspective d'un détail du châssis de la figure 1 ; et
- les figures 5 et 6 sont des vues en coupe suivant le plan A.A du châssis de la figure 4 illustrant respectivement les cas où la ferrure de ceinture de sécurité est absente ou présente.

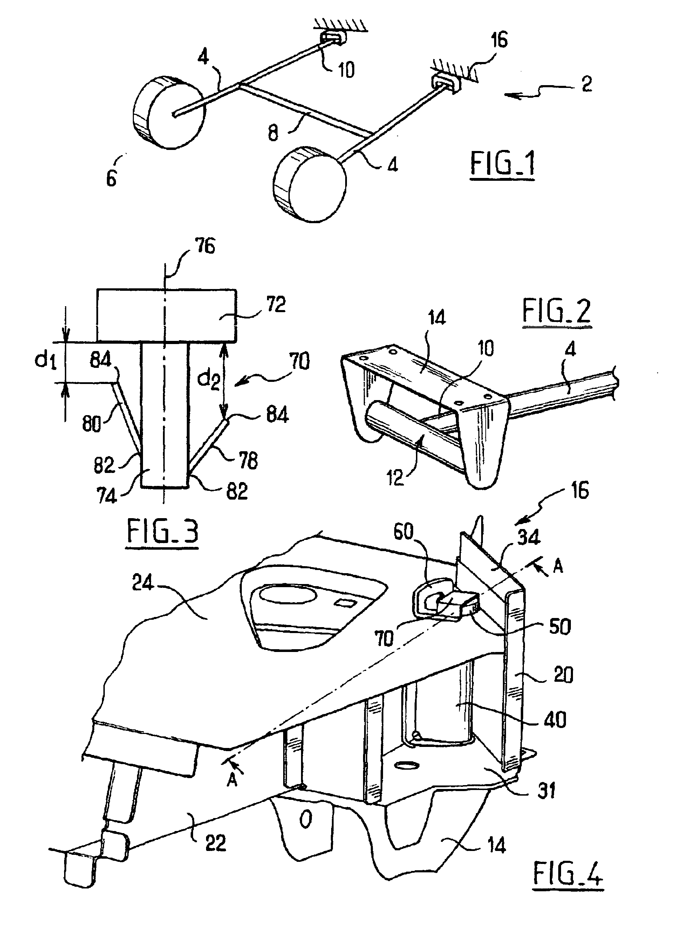

On a illustré aux figures 1 et 2 un châssis 2 d'un véhicule selon l'invention, dans sa partie arrière. Le châssis comprend deux bras longitudinaux 4 s'étendant parallèlement à la direction de marche du véhicule et reliés chacun à une roue 6, ces deux roues correspondant à l'essieu arrière. Les bras sont reliés par une traverse horizontale 8 s'étendant perpendiculairement à la direction de marche du véhicule. Chaque bras présente une extrémité avant 10 reliée à un palier d'articulation 12 parallèle au bras 8, lui-même monté sur une chape 14 fixée à une partie de la caisse 16 du véhicule. La chape 14 est rigidement fixée à la caisse.

La structure de la caisse 16 est illustrée en plus grand détail aux figures 4, 5 et 6. Elle comprend ainsi une traverse 20 à laquelle est fixée la chape 14. La traverse est reliée à un longeron 22 s'étendant parallèlement à la direction de marche du véhicule. La caisse comprend un plancher 24 s'étendant essentiellement suivant un plan horizontal et relié directement au longeron 22 et à la traverse 20.

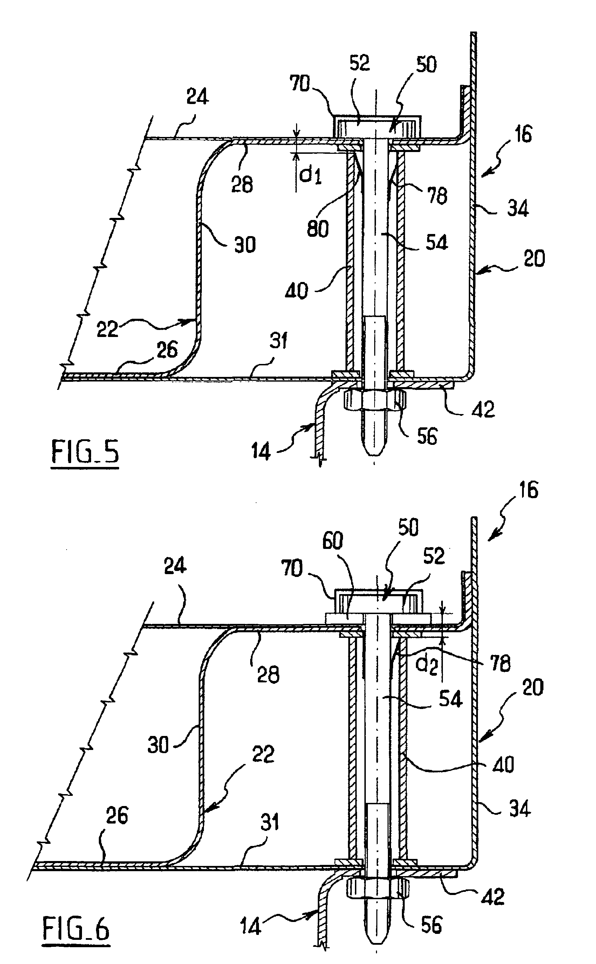

En référence aux figures 5 et 6, le longeron présente une paroi horizontale inférieure 26 et une paroi horizontale supérieure 28. La paroi inférieure 26 s'étend parallèlement à une paroi horizontale 31 de la traverse 20 et en contact surfacique avec celle-ci au-dessus de celle-ci. La paroi supérieure 28 s'étend parallèlement au plancher 24 et en contact surfacique avec celui-ci, au-dessous de celui-ci. Le longeron 22 présente une paroi verticale 30 s'étendant dans la continuité des parois inférieure 26 et supérieure 28 d'une seule pièce avec celles-ci.

La traverse 20 présente une zone de paroi verticale 34 à laquelle sont fixés un bord d'extrémité du plancher 24 et un bord d'extrémité de la paroi supérieure 28 du longeron.

La paroi supérieure 28 s'étend donc à distance et en regard de la paroi horizontale 31. Il en est de même pour les parois verticales 30 et 34. Dans le logement ainsi défini par ces quatre parois est logée une entretoise 40 s'étendant depuis la paroi 28 jusqu'à la paroi 31. Cette entretoise a une paroi présentant des génératrices verticales.

Un bord supérieur 42 de la chape 14 s'étend au-dessous de la paroi 31 en contact surfacique avec celle-ci.

Une vis 50 est prévue qui présente une tête 52 et une tige 54 traversant l'entretoise 40 et maintenue en place par un écrou 56. L'écrou est en appui contre la paroi 42 de la chape 14. La tige traverse l'épaisseur du plancher 24, de la paroi 28, de la traverse 31 et du bord 42 de la chape 14.

Dans l'agencement de la figure 5, la tête de vis est en appui contre le plancher 24, aucune ferrure de ceinture de sécurité n'étant prévue.

A l'inverse, dans l'agencement de la figure 6, une ferrure de ceinture de sécurité 60 est disposée avec sa partie plane en contact surfacique avec le plancher 24 au-dessus de celui-ci. La vis traverse un orifice de cette ferrure, la tête 52 étant en appui sur la ferrure.

Pour la fixation de la vis 50 au plancher, au longeron et à l'entretoise avant la mise en place des autres pièces, on prévoit une agrafe 70 qui a été représentée de façon schématique à la figure 3. L'agrafe comprend une tête 72 et un corps 74, l'un et l'autre creux, symétriques de révolution et ayant un axe commun 76. L'agrafe comprend au moins deux bras 78 et 80. Chaque bras présente une extrémité proximale 82 par laquelle le bras est relié au corps 74 et une extrémité distale 84 ou extrémité libre. L'agrafe étant réalisée en métal, les bras 78 et 80 sont mobiles élastiquement par rapport au corps 74. Ils sont rappelés élastiquement en position éloignée du corps 74 lorsqu'on rapproche l'extrémité libre 84 de ce corps.

L'agrafe 70 est agencée de sorte que la distance d1 séparant au repos l'extrémité libre 84 du bras 80 de la tête est différente de la distance d2 séparant au repos l'extrémité libre 84 du bras 78 de la tête. On remarquera que les distances des extrémités libres à la tête demeurent différentes lorsqu'on rapproche les bras du corps 74. Cette différence de distance permet d'utiliser la même agrafe 72 dans des situations différentes, comme illustré aux figures 5 et 6. On remarque sur la figure 3 que, dans le présent exemple, les extrémités proximales 82 des bras s'étendent elles aussi à des distances différentes de la tête 72, les bras ayant en l'espèce sensiblement même longueur.

Dans les figures 5 à 6, l'agrafe 70 entoure la tête de vis avec sa tête, et son corps 74 entoure la tige 54 de la vis. L'un des bras est destiné à venir en appui par en dessous contre la face interne de l'extrémité supérieure de l'entretoise, la face inférieure de la tête de l'agrafe étant en appui sur le plancher 24 ou sur la ferrure 60.

Ainsi, dans la situation de la figure 5, en l'absence de la ferrure de ceinture, c'est le bras 80 le plus près de la tête qui vient en contact avec la face interne de l'extrémité supérieure de l'entretoise, le bras 78 le plus éloigné de la tête n'assurant aucune fonction de fixation. A titre d'exemple alternatif non représenté, si les bras ont des longueurs différentes, les extrémités proximales 82 des bras 78, 80 peuvent être à égales distances de la tête, le bras le plus long venant alors au contact de la face interne de l'extrémité supérieure de l'entretoise.

A l'inverse, à la figure 6, en présence de la ferrure de ceinture 60, le bras 80 le plus près de la tête demeure plaqué contre le corps 74 puisqu'il n'a pas pu se déployer après introduction de l'agrafe dans l'orifice recevant la vis. C'est le bras 78 le plus éloigné de la tête qui vient cette fois en butée contre la face interne de l'extrémité supérieure de l'entretoise 40.

A titre d'exemple, la distance entre l'extrémité libre du bras 80 et la face inférieure de la tête 72 sera par exemple de 5,2 mm dans la configuration de la figure 5. Sur la figure 6, la distance entre l'extrémité libre du bras 78 et la face inférieure de la tête sera cette fois de 9,2 mm.

Ces deux figures correspondent à des modèles de véhicule différents. La même agrafe peut néanmoins être utilisée.

L'agrafe fait ainsi fonction de clip de fixation de la vis aux différentes pièces.

On voit donc qu'on peut disposer d'un ensemble agrafe-vis unique pour la fixation du plancher à la chape 14 et ce, en l'absence ou en présence d'une ferrure de ceinture. Grâce à l'agrafe, la vis se trouve maintenue par emboîtement élastique.

Bien entendu, on pourra apporter à l'invention de nombreuses modifications sans sortir du cadre de celle-ci.

On pourra prévoir que l'agrafe comprend trois bras ou plus. L'agrafe pourra être utilisée pour la fixation d'autres pièces que la ferrure de ceinture de sécurité, et que celles qui ont été présentées.

## Revendications

1. Agrafe (70) pour la fixation d'une vis (50), comprenant une tête (72) et au moins deux bras (78, 80) présentant une extrémité libre (84), **caractérisée en ce que** les extrémités libres s'étendent à des distances (d1, d2) de la tête différentes l'une de l'autre, l'agrafe étant agencée de sorte que les bras assurent la retenue de la vis à un support prédéterminé.

2. Agrafe selon la revendication précédente, **caractérisée en ce que** les bras (78, 80) présentent chacun une deuxième extrémité (82), les deuxièmes extrémités s'étendant à des distances de la tête (72) différentes l'une de l'autre.

3. Agrafe selon l'une quelconque des revendications précédentes, **caractérisée en ce que** les bras (78, 80) sont mobiles élastiquement par rapport à la tête (72).

4. Agrafe selon l'une quelconque des revendications précédentes, **caractérisée en ce que** l'agrafe (70) comprend un corps (74) reliant les bras à la tête.

5. Châssis (16) de véhicule comprenant au moins une pièce (22, 24, 40, 60), une vis (50) et une agrafe (70) de fixation de la vis à la pièce, **caractérisé en ce que** l'agrafe est conforme à l'une quelconque des revendications précédentes.

6. Châssis selon la revendication précédente, **caractérisé en ce que** le nombre de pièces (22, 24, 40, 60) auxquelles la vis (50) est reliée par l'agrafe (70) est supérieur ou égal à deux.

7. Châssis selon la revendication précédente, **caractérisé en ce que** le nombre de pièces (22, 24, 40, 60) est supérieur ou égal à trois.

8. Châssis selon l'une quelconque des revendications 5 à 7, **caractérisé en ce que** la ou au moins l'une des pièces comprend une ferrure de ceinture de sécurité (60).

9. Ensemble de deux châssis (16) selon l'une quelconque des revendications 5 à 8, la ou les pièces (22, 24, 40, 60) étant différentes et/ou ayant des dimensions différentes entre les deux châssis, **caractérisé en ce que** les agrafes (70) sont identiques.

10. Procédé de fabrication de deux châssis (16) de véhicule, **caractérisé en ce que**, dans chaque châssis, on fixe une vis (50) à au moins une pièce (22, 24, 40, 60) au moyen d'une agrafe (70), la ou les pièces étant différentes et/ou ayant des dimensions différentes entre les deux châssis et les agrafes étant identiques entre les deux châssis.

## Claims

1. Clip (70) for the attachment of a screw (50), comprising a head (72) and at least two arms (78, 80) having a free end (84), **characterized in that** the free ends extend at distances (d1, d2) from the head that are different from each other, the clip being arranged such that the arms ensure that the screw is held with a predetermined support.

2. Clip according to the preceding claim, **characterized in that** the arms (78, 80) each have a second end (82), the second ends extending at distances from the head (72) that are different from each other.

3. Clip according to either of the preceding claims, **characterized in that** the arms (78, 80) can be moved elastically in relation to the head (72).

4. Clip according to any one of the preceding claims, **characterized in that** the clip (70) has a body (74) connecting the arms to the head.

5. Vehicle chassis (16) comprising at least one part (22, 24, 40, 60), a screw (50) and a clip (70) for attaching the screw to the part, **characterized in that** the clip is one according to any one of the preceding claims.

6. Chassis according to the preceding claim, **characterized in that** the number of parts (22, 24, 40, 60) to which the screw (50) is connected by the clip (70) is greater than or equal to two.

7. Chassis according to the preceding claim, **characterized in that** the number of parts (22, 24, 40, 60) is greater than or equal to three.

8. Chassis according to any one of Claims 5 to 7, **characterized in that** the part, or at least one of the parts, comprises a seat belt fitting (60).

9. Assembly comprising two chassis (16) according to any one of Claims 5 to 8, the part or parts (22, 24, 40, 60) of each of the two chassis being different and/or having different dimensions, **characterized in that** the clips (70) are identical.

10. Method of manufacturing two vehicle chassis (16), **characterized in that** in each chassis one screw (50) is attached to at least one part (22, 24, 40, 60) by means of a clip (70), the part or parts of each of the two chassis being different and/or having different dimensions and the clips of each of the two chassis being identical.

## Patentansprüche

1. Klammer (70) zur Befestigung einer Schraube (50), die einen Kopf (72) und mindestens zwei Arme (78, 80) mit einem freien Ende (84) aufweist, **dadurch gekennzeichnet, dass** die freien Enden sich in voneinander unterschiedlichen Abständen (d1, d2) zum Kopf erstrecken, wobei die Klammer so angeordnet ist, dass die Arme den Halt der Schraube an einem vorbestimmten Träger gewährleisten.

2. Klammer nach dem vorhergehenden Anspruch, **dadurch gekennzeichnet, dass** die Arme (78, 80) je ein zweites Ende (82) aufweisen, wobei die zweiten Enden sich in voneinander unterschiedlichen Abständen zum Kopf (72) erstrecken.

3. Klammer nach einem der vorhergehenden Ansprüche, **dadurch gekennzeichnet, dass** die Arme (78, 80) bezüglich des Kopfes (72) elastisch beweglich sind.

4. Klammer nach einem der vorhergehenden Ansprüche, **dadurch gekennzeichnet, dass** die klammer (70) einen Körper (74) aufweist, der die Arme mit dem Kopf verbindet.

5. Fahrgestell (16) eines Fahrzeugs, das mindestens ein Bauteil (22, 24, 40, 60), eine Schraube (50) und eine Klammer (70) zur Befestigung der Schraube am Bauteil aufweist, **dadurch gekennzeichnet, dass** die Klammer einem der vorhergehenden Ansprüche entspricht.

6. Fahrgestell nach dem vorhergehenden Anspruch, **dadurch gekennzeichnet, dass** die Anzahl von Bauteilen (22, 24, 40, 60), mit denen die Schraube (50) durch die Klammer (70) verbunden wird, größer als oder gleich zwei ist.

7. Fahrgestell nach dem vorhergehenden Anspruch, **dadurch gekennzeichnet, dass** die Anzahl von Bauteilen (22, 24, 40, 60) größer als oder gleich drei ist.

8. Fahrgestell nach einem der Ansprüche 5 bis 7, **dadurch gekennzeichnet, dass** das oder mindestens eines der Bauteile einen Beschlag eines Sicherheitsgurts (60) aufweist.

9. Gruppe von zwei Fahrgestellen (16) nach einem der Ansprüche 5 bis 8, wobei das Bauteil oder die Bauteile (22, 24, 40, 60) unterschiedlich sind und/oder unterschiedliche Abmessungen zwischen den beiden Fahrgestellen haben, **dadurch gekennzeichnet, dass** die Klammern (70) gleich sind.

10. Verfahren zur Herstellung von zwei Fahrzeug-Fahrgestellen (16), **dadurch gekennzeichnet, dass** in jedem Fahrgestell eine Schraube (50) an mindestens einem Bauteil (22, 24, 40, 60) mittels einer Klammer (70) befestigt wird, wobei das oder die Bauteile zwischen den beiden Fahrgestellen unterschiedlich sind und/oder unterschiedliche Abmessungen haben, und die Klammern bei beiden Fahrgestellen gleich sind.
